(19) Europäisches Patentamt / European Patent Office / Office européen des brevets

(11) **EP 3 105 706 B1**

(12) **FASCICULE DE BREVET EUROPEEN**

(45) Date de publication et mention de la délivrance du brevet:
**17.02.2021 Bulletin 2021/07**

(21) Numéro de dépôt: **14833586.2**

(22) Date de dépôt: **19.12.2014**

(51) Int Cl.:
*G06K 7/10* *(2006.01)*     *G06K 7/14* *(2006.01)*

(86) Numéro de dépôt international:
**PCT/FR2014/053481**

(87) Numéro de publication internationale:
**WO 2015/121549 (20.08.2015 Gazette 2015/33)**

(54) **PROCÉDÉ DE LECTURE D'UN CODE D'IDENTIFICATION SUR UNE FEUILLE DE VERRE**

METHOD FOR READING AN IDENTIFICATION CODE ON A GLASS SHEET

VERFAHREN ZUM LESEN EINES IDENTIFIKATIONSCODE AUF EINER GLASPLATTE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.02.2014 FR 1451029**

(43) Date de publication de la demande:
**21.12.2016 Bulletin 2016/51**

(73) Titulaire: **SAINT-GOBAIN GLASS FRANCE**
**92400 Courbevoie (FR)**

(72) Inventeurs:
• **DUBOST, Brice**
  **92400 Courbevoie (FR)**
• **SCHIAVONI, Michele**
  **75014 Paris (FR)**
• **COUNIL, Guillaume**
  **92160 Antony (FR)**
• **MIMOUN, Emmanuel**
  **92100 Boulogne Billancourt (FR)**

(74) Mandataire: **Saint-Gobain Recherche**
**Département Propriété Industrielle**
**39 Quai Lucien Lefranc**
**93300 Aubervilliers (FR)**

(56) Documents cités:
**JP-A- 2011 141 724**

**Description**

La présente invention concerne le domaine des codes d'identification marqués sur les feuilles de verre.

Il est possible d'utiliser des symboles en une dimension de type « code-barres » ou analogue et des symboles en deux dimensions de type « Datamatrix » ou analogue pour servir de codes d'identification de plaques de verre.

Ces codes peuvent contenir tout type d'information tel que par exemple un numéro servant d'identifiant de la feuille de verre. Des informations telles que le lieu de fabrication ou l'heure et la date de fabrication peuvent également être intégrées, de même que des informations de tout autre type adapté.

Les symboles sont par exemple marqués au moyen d'un rayonnement laser de tout type adapté, orienté de préférence perpendiculairement à la feuille de verre, i.e. au plan général de la feuille de verre. En effet, les symboles ainsi marqués sont généralement destinés à être lus de face en positionnant un appareil face au symbole, et donc face à l'une des deux faces principales de la feuille de verre.

Ce marquage est par exemple réalisé à proximité d'une tranche de la feuille de verre.

Cependant, de tels symboles ne sont pas destinés à être lus lorsque les feuilles de verre sont empilées.

Le document JP 2011 141724 décrit un exemple d'appareil de lecture permettant la lecture d'un code, inscrit sur l'une des faces principales d'un substrat de verre.

Un but de l'invention est de permettre une lecture rapide des codes présents sur des feuilles de verre, que les feuilles de verres soient isolées ou empilées.

Selon la présente invention, il s'agit d'un procédé, tel que défini dans la revendication 1, de lecture de symboles formant code marqués chacun sur une face de feuilles de verre à proximité d'une même tranche des feuilles de verre, les feuilles de verre étant disposées en une pile, le procédé comprenant :

- une acquisition, avec une caméra, d'au moins une image par ladite tranche des feuilles de verre, la direction d'observation étant non perpendiculaire et inclinée par rapport à ladite tranche de chacune des feuilles de verre dont le code doit être lu avec ladite image ;
- une étape de traitement d'image dans laquelle l'image acquise est traitée par un calculateur programmé de façon à extraire l'information présente dans au moins un code visible sur l'image et devant être lu,

l'angle d'observation $\alpha$ entre la direction d'observation et la normale à la tranche de la feuille de verre devant être lue étant choisi tel que Ratio d'aspect = $\cos(\alpha) * \tan(\arcsin(\sin(\alpha)/ n\_verre))$ est au moins 0,2.

Selon des modes particuliers de réalisation, le procédé ayant en outre l'une ou plusieurs des caractéristiques suivantes prise(s) isolément ou suivant toutes les combinaisons techniquement possibles :

- lesdits symboles sont à au plus de 10mm de ladite tranche, de préférence à au plus 7mm, de préférence à au plus 5mm, de préférence encore à au plus 4mm ;
- l'angle d'observation entre la direction d'observation et la normale à la tranche de la feuille de verre devant être lue est choisi tel que la déformation du rapport d'aspect du code soit la plus faible ;
- l'angle d'observation a entre la direction d'observation et la normale à la tranche de la feuille de verre devant être lue est choisi tel que Ratio d'aspect=$\cos(\alpha)*\tan(\arcsin(\sin(\alpha)/n\_verre))$ soit maximum ;
- l'image est observée après une ou plusieurs réflexions totale(s) interne(s) ;
- une image est acquise pour chaque feuille de verre de la pile de feuilles de verre, la caméra étant déplacée entre chaque image de façon à ce que la direction d'observation soit non perpendiculaire et inclinée par rapport à la tranche de la feuille de verre devant être lue ;
- pour chaque image acquise, au moins une partie des feuilles de la pile sont visibles sur l'image acquise, l'étape de traitement utilisant la partie de l'image correspondant à la feuille de verre devant être lue ;
- pour chaque image acquise, l'angle d'observation a entre la direction d'observation et la normale à la tranche de la feuille de verre devant être lue est identique ;
- une seule image est acquise pour lire le code de plusieurs feuilles de verre de la pile, voire une seule image acquise pour toutes les feuilles de verre de la pile ;
- la caméra est suffisamment éloignée pour que l'angle d'observation entre la direction d'observation et la normale à la tranche de la feuille de verre devant être lue soit dans une fourchette de 40 degrés pour chaque image acquise de la pile de feuilles de verre, de préférence dans une fourchette de 20 degrés. ;
- le procédé comprend une étape d'application, entre la caméra et la pile de feuilles de verre d'une plaque transparente rigide avec, à l'interface entre la plaque transparente rigide et la tranche des feuilles de verre empilées, un matériau transparent souple ou liquide ;
- le matériau transparent souple ou liquide est de l'eau ou un matériau à base de silicone ou analogue ;
- la plaque transparente rigide est une feuille de verre ou une feuille en PMMA ou analogue.

L'invention sera mieux comprise à la lecture de la description qui va suivre, faite uniquement à titre d'exemple illustratif, sur la base de figures parmi lesquelles :

- la figure 1 est une photographie d'une feuille de verre, un symbole de type « Datamatrix » étant marqué sur la face de la feuille de verre ;
- la figure 2 est une vue schématique illustrant un dispositif de lecture d'une pile de feuilles de verre selon un mode de réalisation de l'invention ;
- les figures 3, 3bis et 3ter illustrent respectivement un symbole vu par le dessus, un schéma optique en coupe transversale expliquant la visualisation de ce même code par la tranche à un angle d'observation a, et l'aspect du code vu par la tranche à l'angle a.
- la figure 4 est un graphe illustrant le ratio d'aspect observé du code (rapport $\frac{a'}{a}$ sur la figure 3bis) en fonction de l'angle d'observation a par rapport à la normale à la tranche de la feuille de verre ;
- la figure 5 illustre l'angle d'observation a nécessaire en fonction de la distance au bord en mm et le ratio d'aspect à cette distance et à cet angle (taille du code fixée à 3mm et épaisseur de la feuille de verre fixée à 4mm);
- la figure 6 est un schéma illustrant un autre mode de réalisation pour lire le code, utilisant la réflexion de l'image à l'intérieur de la feuille de verre ;
- la figure 7 illustre un procédé pour faciliter la lecture des codes par la tranche selon un autre mode de réalisation ; et
- la figure 8 illustre différents type de symboles formant code.

Dans tout le texte, on entend par « face » l'une des deux faces principales de la feuille de verre et par tranche, l'une des quatre tranches formant les côtés de la feuille de verre.

On entend également par « direction d'observation » l'axe entre l'objectif de la caméra et le point observé. La distance entre l'observateur et la tranche est grande devant l'épaisseur, si bien que tout point de la tranche est considéré comme observé avec le même angle.

En outre, à titre d'exemple, dans tous les calculs, l'indice du verre retenu $n_{verre}$ = 1,5.

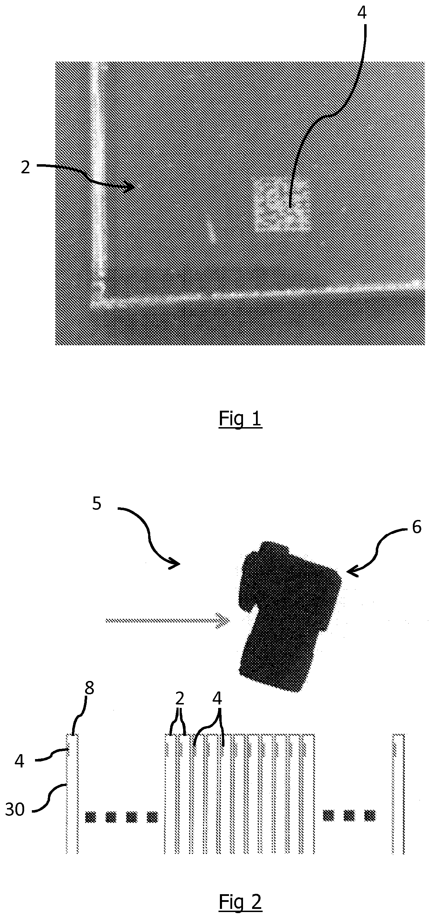

Comme illustré sur la figure 1, chaque feuille de verre 2 est marquée d'un symbole 4 formant code.

Le symbole 4 est de préférence en deux dimensions, par exemple du type Datamatrix.

La figure 2 illustre un mode de réalisation de l'invention pour la lecture de ces symboles lorsque les feuilles de verre sont empilées.

Un appareil de lecture 5 comprenant une caméra 6 est positionné de façon à observer la tranche 8 des feuilles de verre 2 empilées, pour une observation par la tranche 8.

L'appareil de lecture 5 comprend également un calculateur (non représenté) relié à la caméra 6 et comprenant une mémoire (non représentée) sur laquelle sont stockés des programmes aptes à traiter les images acquises et décoder les symboles 4.

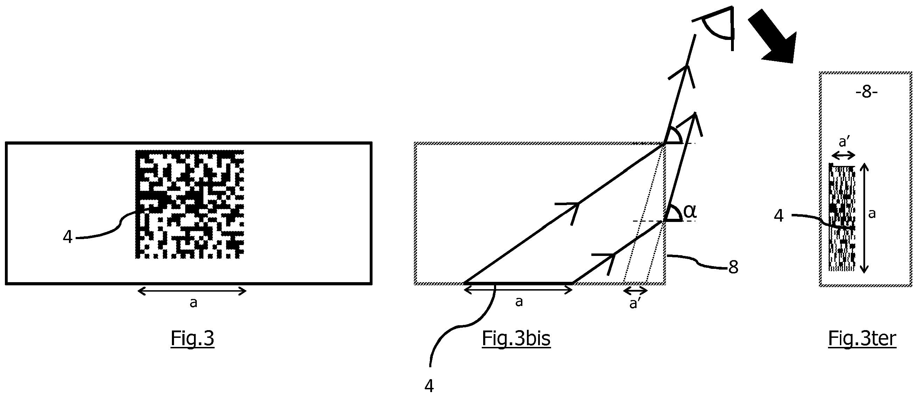

Les symboles 4 sont positionnés près d'une des tranches 8. En effet, comme l'illustrent les figures 3 à 3ter, le symbole apparaît déformé par la tranche en raison de deux phénomènes en compétition : la réfraction et la projection. La figure 3 correspond à une vue de face, la figure 3bis à une vue en coupe et la figure 3ter à une vue par la tranche.

Plus l'angle d'observation a entre la direction d'observation et la normale à la tranche est faible, plus la projection réduit la taille apparente du symbole (i.e. la taille du symbole telle qu'elle apparaît sur l'image prise par la caméra). Et plus l'angle d'observation a est grand, plus la réfraction est importante et réduit la taille apparente du symbole.

Qui plus est, il est préférable, pour le traitement de l'image, que le ratio d'aspect, i.e. le rapport entre la largeur apparente du symbole « a' » et sa largeur réelle « a », soit le plus grand possible. Dans la pratique, il est possible d'obtenir un ratio d'aspect d'au moins 0,2, voire d'au moins 0,3.

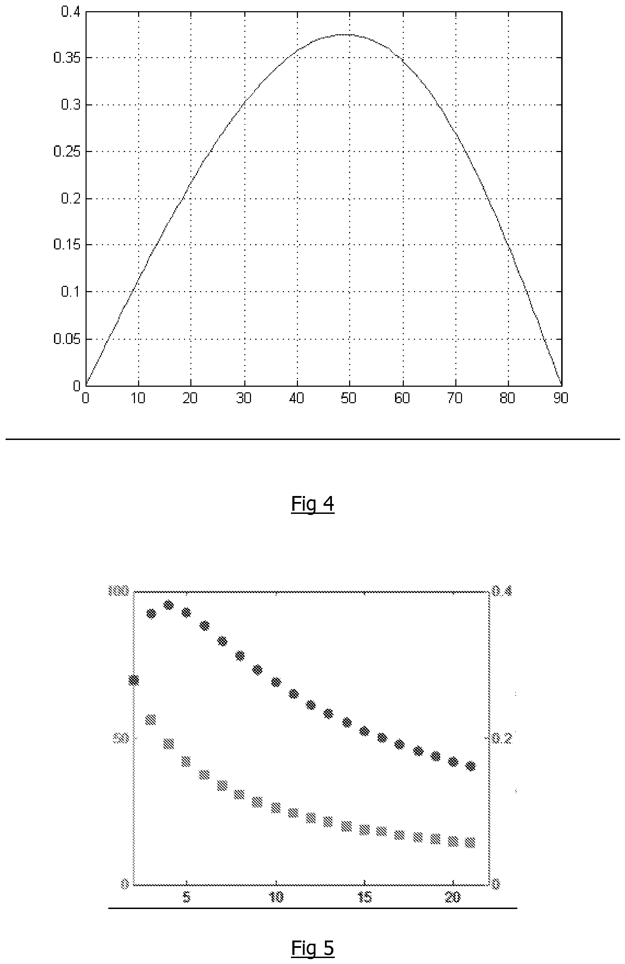

Comme l'illustre la figure 4, il a été trouvé que l'angle d'observation a entre la direction d'observation et la normale à la tranche observée connaît un optimum autour de 50 degrés. Sont représentés en abscisses l'angle $\alpha$ en degrés et en ordonnées le ratio d'aspect $\frac{a'}{a}$.

Le ratio d'aspect $\frac{a'}{a}$ de l'objet entre sa largeur apparente a' et sa largeur réelle a est donné par :

$$Ratio\ d'aspect = \cos(\alpha) * \tan\left(\arcsin\left(\frac{\sin(\alpha)}{n_{verre}}\right)\right)$$

Avec a l'angle d'observation entre la direction d'observation et la normale à la tranche de la feuille de verre et $n_{verre}$ l'indice du verre à 550nm.

De préférence, l'angle d'observation a est par exemple choisi entre 30 et 70 degrés dans le cas du verre.

La figure 5 illustre quant à elle le rôle de la distance au bord, i.e. de la distance entre le symbole 4 et la tranche 8. Sur l'axe des abscisses est représentée la distance au bord en mm, en ordonnées à gauche l'angle d'observation a (points en forme de carrés) et en ordonnées à droite le ratio d'aspect $\frac{a'}{a}$ (points en forme de ronds).

Si l'espacement au bord est plus grand, la place restante dans la fenêtre de vue diminue. On est alors contraint d'utiliser des angles de vue moindres, et la compression due à la projection augmente (i.e. le ratio d'aspect $\frac{a'}{a}$ diminue).

Ainsi, en conditions d'observation directe (sans réflexion), les symboles sont par exemple à au plus 10mm de la tranche la plus proche, de préférence à au plus 7mm, de préférence à au plus 5mm, de préférence encore à au plus 4mm.

A titre d'exemple, pour un verre de 4mm d'épaisseur, un symbole d'une taille de 1,2mm, une largeur de tranche disponible pour l'observation de 2,6mm, et une distance au bord de 3,5mm, l'angle d'observation a est choisi de 50°.

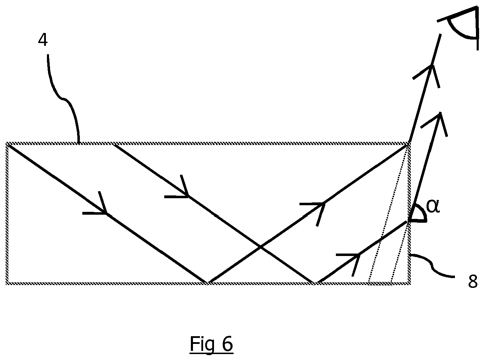

Cependant, comme l'illustre la figure 6, des symboles plus éloignés de la tranche peuvent être lus par une observation de l'image en réflexion.

Par exemple pour un verre d'épaisseur 4mm, le symbole aura une apparence analogue à une distance de +6mm par rapport à une observation directe.

Cependant, cette solution d'observation en réflexion n'est dans la pratique utilisable que dans le cas d'un verre suffisamment clair, l'absorption étant trop importante dans le cas d'un verre teinté.

Pour ce qui concerne l'acquisition des images, on distingue essentiellement deux modes de réalisation possibles.

Dans le premier mode de réalisation, qui est le mode de réalisation préféré, l'un de la pile de verre ou de l'appareil de lecture est mobile, de façon à acquérir une image par feuille de verre avec le même angle d'observation a pour chaque feuille de verre 2.

A noter cependant que sur chaque image plusieurs tranches 8 seront par exemple visibles mais seul le symbole 4 correspondant à la feuille 2 devant être lue sera traité par le calculateur.

Dans un deuxième mode de réalisation, une seule image est acquise pour l'ensemble de la pile de feuilles de verre. Pour ce faire, il sera préférable que la caméra soit suffisamment éloignée pour que l'angle d'observation a soit identique à plus ou moins 20 degrés près, i.e. dans une fourchette de 40 degrés, de préférence dans à plus ou moins 10 degrés près, de préférence encore à plus ou moins 5 degrés près.

En variante, une seule image est acquise pour plusieurs feuilles de verre 2, par exemple pour des groupes de feuilles de verre adjacentes de même nombre, par exemple pour des groupes de 2, 3 ou 4 feuilles de verre. Et de façon préférée, l'image de chaque groupe est acquise avec un angle d'observation a identique.

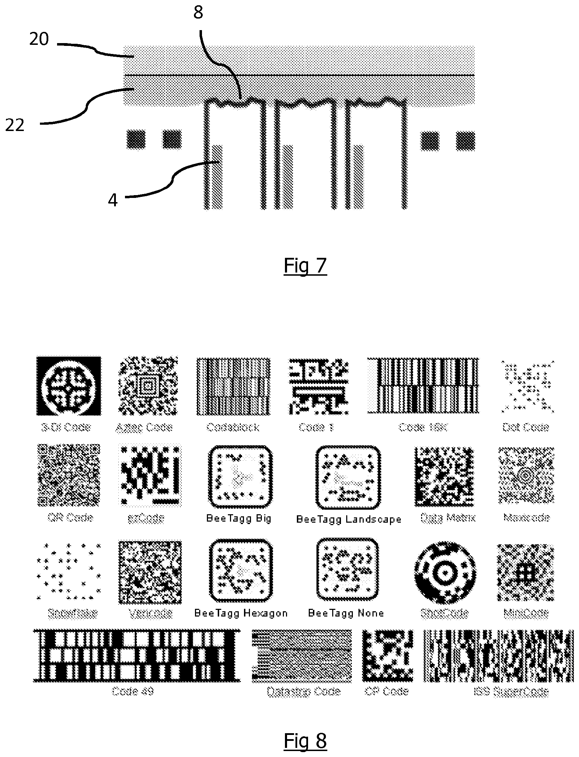

La figure 7 illustre un autre mode de réalisation possible, qui peut être combiné aux modes de réalisation précédents.

Dans ce mode de réalisation, le procédé de lecture consiste à appliquer sur la tranche des feuilles de verres empilés, une plaque transparente 20 avec un matériau souple 22 interposé à l'interface entre la plaque et la tranche 8 des feuilles de verre, de façon à réduire les défauts optiques résultant des défauts de surface présents sur les tranches 8.

Il s'est en effet avéré que la découpe des feuilles de verre 2 pouvait conduire à une mauvaise lisibilité par la tranche en raison de l'état de surface de la tranche 8 après découpe.

La plaque 20 est par exemple une feuille rigide en matériau transparent, par exemple en verre.

Le matériau souple est par exemple une feuille en matériau transparent souple 22, par exemple en matière plastique, par exemple en silicone.

La feuille souple 22 est par exemple collée sur la plaque 20 ou fixée par tout autre moyen adapté.

En variante, le matériau souple est remplacé par un liquide tel que de l'eau ou autre matériau analogue, un colloïde, etc.

Ainsi, avant acquisition d'image, le matériau d'interface est appliqué sur la tranche puis la plaque 20 est appliquée contre la tranche 8 des feuilles de verre de la pile, entre la pile et la caméra.

Les feuilles de verre 2 ont par exemple une épaisseur comprise entre 0,5 et 19 mm, notamment entre 2 et 12 mm, par exemple entre 4 et 8 mm. En variante cependant, les feuilles de verre ont une épaisseur de tout type adapté.

Le symbole 4 est par exemple marqué immédiatement après découpe du ruban de verre flotté en feuilles de verre de grandes dimensions, ou immédiatement avant ou même pendant la découpe. La feuille de verre 2 a alors une largeur supérieure à 2 mètres et une longueur supérieure à 5 mètres.

Il s'agit par exemple de verre silico-sodo-calcique mais il s'agit en variante d'un verre de tout type adapté.

D'une manière générale, il s'agit d'une feuille de verre 2 de tout type adapté.

A noter également que le symbole 4 visible sur les figures 1 et 3 n'est pas limitatif. Il s'agit en variante d'un symbole en deux dimensions de tout type adapté. La figure 8 illustre d'autres types de codes connus, parmi eux : 3-DI code, Aztex Code, Codablock, Code 1, Code 16K, Dot Code, QR Code, ezCode, BeeTagg Big, BeeTagg Landscape, Data Matrix, Maxicode, Snpwflake, Verocode, BeeTagg Hexagon, BeeTagg None, ShotCode, MiniCode, Code 49, Datastrip Code, CP Code, ISS SuperCode.

D'une manière générale, il s'agit d'un symbole 4 formant un code de tout type adapté.

Pour réaliser le marquage du symbole 4, on utilise par exemple un laser de marquage $CO_2$ de 50W. A titre d'exemple, le laser est adapté pour altérer la surface, la couleur, ou encore l'indice de réfraction de la feuille de verre et ainsi marquer le symbole 4 de façon lisible.

L'appareil de marquage est disposé en regard d'une face principale 30 (Fig.2) de la feuille de verre pour un marquage par la face 30 de la feuille de verre.

## Revendications

1. Procédé de lecture de symboles (4) formant code marqués chacun sur une face (30) de feuilles de verre (2) à proximité d'une même tranche (8) des feuilles de verre, les feuilles de verre étant disposées en une pile, le procédé comprenant :

   - une acquisition, avec une caméra (6), d'au moins une image par ladite tranche des feuilles de verre, la direction d'observation étant non perpendiculaire et inclinée par rapport à ladite tranche de chacune des feuilles de verre dont le code doit être lu avec ladite image ;
   - une étape de traitement d'image dans laquelle l'image acquise est traitée par un calculateur programmé de façon à extraire l'information présente dans au moins un code visible sur l'image et devant être lu ;

   l'angle d'observation a entre la direction d'observation et la normale à la tranche de la feuille de verre devant être lue étant choisi tel que *Ratio d'aspect* $= \cos(\alpha) * \tan\left(\arcsin\left(\frac{\sin(\alpha)}{n_{verre}}\right)\right)$ est au moins 0,2.

2. Procédé selon la revendication 1, dans lequel lesdits symboles (4) sont à au plus de 10mm de ladite tranche (8), de préférence à au plus 7mm, de préférence à au plus 5mm, de préférence encore à au plus 4mm.

3. Procédé selon la revendication 1, dans lequel l'angle d'observation ($\alpha$) entre la direction d'observation et la normale à la tranche (8) de la feuille de verre (2) devant être lue est choisi tel que la déformation du rapport d'aspect du symbole (4) soit la plus faible.

4. Procédé selon la revendication 3, dans lequel l'angle d'observation $\alpha$ entre la direction d'observation et la normale à la tranche de la feuille de verre devant être lue est choisi tel que

   $$Ratio\ d'aspect = \cos(\alpha) * \tan\left(\arcsin\left(\frac{\sin(\alpha)}{n_{verre}}\right)\right) \text{ soit maximum.}$$

5. Procédé selon l'une quelconque des revendications précédentes, dans lequel l'image est observée après une ou plusieurs réflexions totale(s) interne(s).

6. Procédé selon l'une quelconque des revendications précédentes, dans lequel une image est acquise pour chaque feuille de verre (2) de la pile de feuilles de verre, la caméra (6) étant déplacée entre chaque image de façon à ce que la direction d'observation soit non perpendiculaire et inclinée par rapport à la tranche de la feuille de verre devant être lue.

7. Procédé selon la revendication précédente, dans lequel pour chaque image acquise, au moins une partie des feuilles de la pile sont visibles sur l'image acquise, l'étape de traitement utilisant la partie de l'image correspondant à la feuille de verre devant être lue.

8. Procédé selon la revendication précédente, dans lequel pour chaque image acquise, l'angle d'observation ($\alpha$) entre la direction d'observation et la normale à la tranche (8) de la feuille de verre devant être lue est identique.

9. Procédé selon l'une quelconque des revendications 1 à 7, dans lequel une seule image est acquise pour lire le code (4) de plusieurs feuilles de verre de la pile, voire une seule image acquise pour toutes les feuilles de verre de la pile.

10. Procédé selon la revendication précédente, dans lequel la caméra (6) est suffisamment éloignée pour que l'angle

d'observation ($\alpha$) entre la direction d'observation et la normale à la tranche de la feuille de verre devant être lue soit dans une fourchette de 40 degrés pour chaque image acquise de la pile de feuilles de verre, de préférence dans une fourchette de 20 degrés.

11. Procédé selon l'une quelconque des revendications précédentes, comprenant une étape d'application, entre la caméra (6) et la pile de feuilles de verre d'une plaque (20) transparente rigide avec, à l'interface entre la plaque transparente rigide et la tranche (8) des feuilles de verre empilées, un matériau transparent d'interface (22).

12. Procédé selon la revendication précédente, dans lequel le matériau transparent d'interface (22) est un liquide ou analogue tel que de l'eau ou un matériau souple à base de silicone ou analogue.

13. Procédé selon la revendication 11 ou 12, dans lequel la plaque transparente rigide (20) est une feuille de verre ou une feuille en PMMA ou analogue.

**Patentansprüche**

1. Verfahren zum Lesen von Symbolen (4), die einen Code bilden, die jeweils auf einer Fläche (30) von Glasplatten (2) in der Nähe einer gleichen Kante (8) der Glasplatten markiert sind, wobei die Glasplatten in einem Stapel angeordnet sind, wobei das Verfahren umfasst:

   - eine Erfassung, mit einer Kamera (6), von mindestens einem Bild durch die Kante der Glasplatten, wobei die Beobachtungsrichtung nicht senkrecht und geneigt ist in Bezug auf die Kante jeder der Glasplatten, deren Code mit dem Bild gelesen werden soll;
   - einen Bildverarbeitungsschritt, wobei das erfasste Bild durch einen Rechner verarbeitet wird, der so programmiert ist, dass er die in mindestens einem auf dem Bild sichtbaren und zu lesenden Code vorhandene Information extrahiert;

   wobei der Beobachtungswinkel a zwischen der Beobachtungsrichtung und der Normalen zur Kante der zu lesenden Glasplatte so gewählt wird, dass

$$das\ Seitenverhältnis = \cos(\alpha) * \tan\left(\arcsin\left(\frac{\sin(\alpha)}{n_{Glas}}\right)\right)$$

   mindestens 0,2 beträgt.

2. Verfahren nach Anspruch 1, wobei die Symbole (4) höchstens 10 mm von der Kante (8), vorzugsweise höchstens 7 mm, vorzugsweise höchstens 5 mm, mehr bevorzugt höchstens 4 mm entfernt sind.

3. Verfahren nach Anspruch 1, wobei der Beobachtungswinkel ($\alpha$) zwischen der Beobachtungsrichtung und der Normalen zur Kante (8) der zu lesenden Glasplatte (2) so gewählt wird, dass die Verformung des Seitenverhältnisses des Symbols (4) am geringsten ist.

4. Verfahren nach Anspruch 3, wobei der Beobachtungswinkel a zwischen der Beobachtungsrichtung und der Normalen zur Kante der zu lesenden Glasplatte so gewählt wird, dass

$$das\ Seitenverhältnis = \cos(\alpha) * \tan\left(\arcsin\left(\frac{\sin(\alpha)}{n_{Glas}}\right)\right)$$

   das Maximum ist.

5. Verfahren nach einem der vorstehenden Ansprüche, wobei das Bild nach einer oder mehreren inneren Totalreflexion(en) beobachtet wird.

6. Verfahren nach einem der vorstehenden Ansprüche, wobei für jede Glasplatte (2) des Glasplattenstapels ein Bild erfasst wird, wobei die Kamera (6) zwischen jedem Bild so bewegt wird, dass die Beobachtungsrichtung nicht senkrecht und geneigt ist in Bezug auf die Kante der zu lesenden Glasplatte.

7. Verfahren nach dem vorstehenden Anspruch, wobei für jedes erfasste Bild mindestens ein Teil der Platten des Stapels in dem erfassten Bild sichtbar ist, wobei der Verarbeitungsschritt den Teil des Bildes verwendet, welcher der zu lesenden Glasplatte entspricht.

8. Verfahren nach dem vorstehenden Anspruch, wobei für jedes erfasste Bild der Beobachtungswinkel ($\alpha$) zwischen der Beobachtungsrichtung und der Normalen zur Kante (8) der zu lesenden Glasplatte identisch ist.

9. Verfahren nach einem der Ansprüche 1 bis 7, wobei ein einzelnes Bild zum Lesen des Codes (4) mehrerer Glasplatten des Stapels erfasst wird, bzw. ein einzelnes erfasstes Bild für alle Glasplatten des Stapels.

10. Verfahren nach dem vorstehenden Anspruch, wobei die Kamera (6) weit genug entfernt ist, dass der Beobachtungswinkel ($\alpha$) zwischen der Beobachtungsrichtung und der Normalen zur Kante der zu lesenden Glasplatte für jedes erfasste Bild des Glasplattenstapels in einem Bereich von 40 Grad, vorzugsweise in einem Bereich von 20 Grad, liegt.

11. Verfahren nach einem der vorstehenden Ansprüche, umfassend einen Schritt zum Anbringen einer starren transparenten Platte (20) zwischen der Kamera (6) und dem Glasplattenstapel mit einem transparenten Schnittstellenmaterial (22) an der Schnittstelle zwischen der starren transparenten Platte und der Kante (8) der gestapelten Glasplatten.

12. Verfahren nach dem vorstehenden Anspruch, wobei das transparente Schnittstellenmaterial (22) eine Flüssigkeit oder dergleichen, wie Wasser oder ein flexibles Material auf Silikonbasis oder dergleichen, ist.

13. Verfahren nach Anspruch 11 oder 12, wobei die starre transparente Platte (20) eine Glasplatte oder eine Platte aus PMMA oder dergleichen ist.

## Claims

1. A method for reading symbols (4) forming a code, said symbols each being marked on one face (30) of a number of glass sheets (2) in proximity to the same edge face (8) of the glass sheets, the glass sheets being arranged in a stack, the method comprising:

   - acquiring, with a camera (6), at least one image via said edge face of the glass sheets, the observation direction being non-perpendicular and inclined relative to said edge face of each of the glass sheets the code of which must be read with said image; and
   - an image processing step in which the acquired image is processed by a processor programmed to extract information present in at least one code visible in the image and having to be read,

   the observation angle $\alpha$ between the observation direction and the normal to the edge face of the glass sheet having to be read being chosen such that $Aspect\ ratio = \cos(\alpha) \times \tan\left(\arcsin\left(\dfrac{\sin(\alpha)}{n_{glass}}\right)\right)$ is at least 0,2.

2. The method as claimed in claim 1, in which said symbols (4) are at most 10 mm from said edge face (8) and preferably at most 7 mm, more preferably at most 5 mm and even more preferably at most 4 mm from said edge face (8).

3. The method as claimed in claim 1, in which the observation angle ($\alpha$) between the observation direction and the normal to the edge face (8) of the glass sheet (2) having to be read is chosen such that the deformation of the aspect ratio of the symbol (4) is as small as possible.

4. The method as claimed in claim 3, in which the observation angle $\alpha$ between the observation direction and the normal to the edge face of the glass sheet having to be read is chosen such that

$$Aspect\ ratio = \cos(\alpha) \times \tan\left(\arcsin\left(\frac{\sin(\alpha)}{n_{glass}}\right)\right)$$ is maximized.

5. The method as claimed in any one of the preceding claims, in which the image is observed after one or more total internal reflections.

6. The method as claimed in any one of the preceding claims, in which one image is acquired for each glass sheet (2) of the stack of glass sheets, the camera (6) being moved between each image so that the observation direction is non-perpendicular and inclined relative to the edge face of the glass sheet having to be read.

7. The method as claimed in the preceding claim, in which, for each acquired image, at least some of the sheets of the stack are visible in the acquired image, the processing step using the portion of the image corresponding to the glass sheet having to be read.

8. The method as claimed in the preceding claim, in which for each acquired image the observation angle ($\alpha$) between the observation direction and the normal to the edge face (8) of the glass sheet having to be read is identical.

9. The method as claimed in any one of claims 1 to 7, in which a single image is acquired to read the code (4) of a plurality of glass sheets of the stack, or only one image is acquired for all the glass sheets of the stack.

10. The method as claimed in the preceding claim, in which the camera (6) is located far enough away that the observation angle ($\alpha$) between the observation direction and the normal to the edge face of the glass sheet having to be read is in a bracket of 40 degrees for each image acquired of the stack of glass sheets, and preferably in a bracket of 20 degrees.

11. The method as claimed in any one of the preceding claims, comprising a step of applying, between the camera (6) and the stack of glass sheets, a rigid transparent panel (20) having, at the interface between the rigid transparent panel and the edge face (8) of the stacked glass sheets, a transparent interface material (22).

12. The method as claimed in the preceding claim, in which the transparent interface material (22) is a liquid or an analogous material such as water, or a flexible material based on silicone or an analogous material.

13. The method as claimed in claim 11 or 12, in which the rigid transparent panel (20) is a glass sheet or a sheet of PMMA or an analogous material.

Fig 1

Fig 2

-8-

a'

4

Fig.3ter

α

8

a'

a

Fig.3bis

4

a

Fig.3

4

Fig 4

Fig 5

Fig 6

Fig 7

3-DI Code    Aztec Code    Codablock    Code 1    Code 16K    Dot Code

QR Code    szCode    BeeTagg Big    BeeTagg Landscape    Data Matrix    Maxicode

Snowflake    Veincode    BeeTagg Hexagon    BeeTagg None    ShotCode    MiniCode

Code 49    Datastrip Code    CP Code    ISS SuperCode

Fig 8

**EP 3 105 706 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2011141724 A